# EUROPEAN PATENT SPECIFICATION

(11) **EP 2 435 630 B1**
(45) Date of publication and mention of the grant of the patent: **13.10.2021**
(21) Application number: 10780880.0
(22) Date of filing: 19.05.2010
(51) Int. Cl.: D21C 9/18, B01D 33/067, D21C 9/06, B30B 9/20, D21D 1/40

(54) **A DEVICE FOR PREVENTING THE REWETTING OF PULP**
VORRICHTUNG ZUR VERHINDERUNG DER WIEDERBEFEUCHTUNG EINER PULPE
DISPOSITIF POUR EMPÊCHER LA RÉHUMIDIFICATION DE LA PÂTE À PAPIER

(30) Priority: 29.05.2009 SE 0900735
(43) Date of publication of application: 04.04.2012
(73) Proprietor: Valmet Technologies, Inc., 02150 Espoo (FI)
(72) Inventor: LUNDBERG, Jörgen, S-856 43 Sundsvall (SE)
(74) Representative: Groth & Co. KB
(86) International application number: PCT/SE2010/050543
(87) International publication number: WO 2010/138059

(56) References cited:
- US-A- 4 276 169
- US-A- 4 370 231
- US-A- 4 581 139
- US-A- 4 581 139
- US-A- 5 244 572
- US-A- 5 470 471
- US-A- 5 667 642
- US-A1- 2006 065 378
- US-B1- 6 311 849
- None

## Description

### Technical Field

The present invention relates to an apparatus for processing pulp, especially cellulose-containing pulp, as defined in independent claim 1. The apparatus comprises at least one drum rotatable about an axis of rotation and provided with an outer surface permeable to liquid and a plurality of filtrate channels which extend along the axial extension of the drum and are provided inwardly of the outer surface. The apparatus receives the pulp on the outer surface of the drum and processes the pulp situated on the outer surface while rotating the drum, and the apparatus processes the pulp by at least removing liquid from the pulp and transporting the liquid from the pulp to the filtrate channels through the outer surface, each filtrate channel being adapted to discharge liquid therefrom and being defined by at least a radially outer wall. The device is adapted to be installed in one of the plurality of filtrate channels, and the device comprises an axially extending filtrate barrier which is adapted to be positioned towards the radially outer wall of the filtrate channel to prevent the flow of liquid from the trailing part of the filtrate channel to the outer surface of the drum, and at least one axially extending support element connected to the filtrate barrier.

### Background of the Invention

Fibre lines producing cellulose-based products comprise some type of washing equipment for separating the liquor of the cooking from the pulp. Later on in the process, washing equipment is also provided to separate bleaching liquors after the bleaching steps. There are a number of different types of washing equipment operating according to different principles.

When producing cellulose-based products, a roll press is frequently used for washing and/or dewatering the cellulose-containing pulp. The roll press comprises two co-operating and counter-rotating press rolls, each having a permeable outer surface, a so called mantle surface, whereby the outer surface is permeable to liquid pressed out of the pulp. The pulp is deposited on the permeable outer surface and pressed in the roll nip, or the press nip, between the press rolls, whereby liquid is pressed out of the pulp. Normally, the roll press also includes one or more washing zones prior to the press nip. One example of such a roll press is disclosed in US 3,980,518, where the axes of rotation of the press rolls are in substantially the same horizontal plane, and the pulp is passing the press nip between the press rolls in a vertical direction, from below upwards.

Another known washing equipment is the drum washer, where the cellulose-containing pulp is deposited and dewatered on a single rotating filter drum, which has a permeable outer surface, after the addition of washing liquid, which displaces the liquor remaining on the pulp web after the preceding process step, for example a cooking step or bleaching step. The static pressure causes the contaminated liquid, called filtrate, to pass through the outer surface permeable to liquid. A further development of the original drum washer is the pressurized displacement washer, where the filtrate, under overpressure, is forced to pass through the permeable outer surface.

Both the drum washer and the roll press are often provided with a plurality of filtrate channels which extend along the axial extension of the roll, or drum, and are provided inwardly of the permeable outer surface. The filtrate channels receive the liquid, which has been transported through the outer surface, from the pulp situated on the outer surface, and the liquid is then transported and discharged from the filtrate channels to a filtrate container connected thereto.

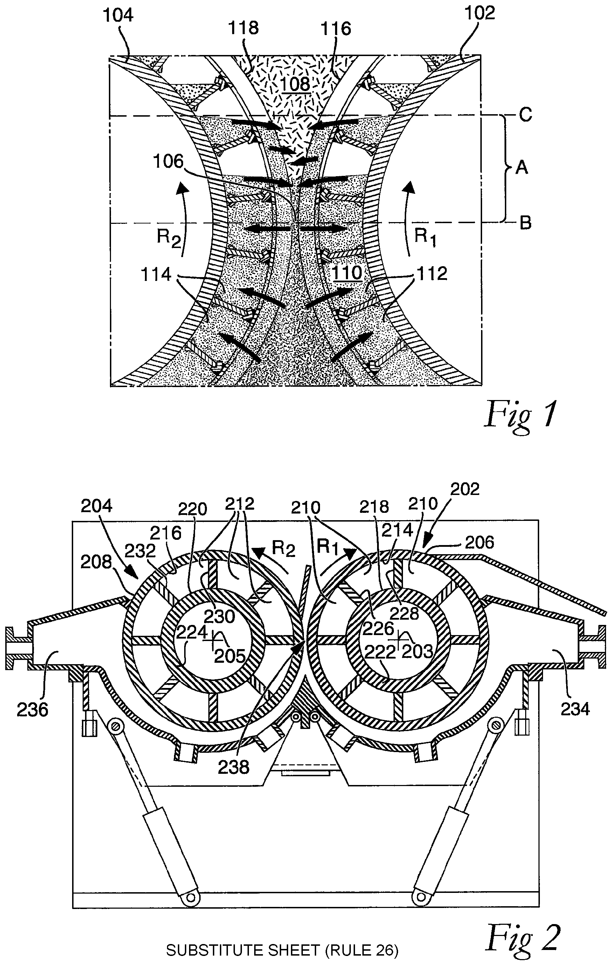

When large amounts of filtrate are involved, which is common, especially with regard to rolls, or drums, having a long axial extension, rewetting is a problem which arises, i.e. that the filtrate which have been transported to the filtrate channels flows back through the outer surface and dilutes the washed and/or pressed pulp. In fig. 1, this rewetting is illustrated with regard to a prior-art roll press having two co-operating and counter-rotating press rolls.

US 5,470,471 discloses a press roll where baffle plates are anchored inside the filtrate channel of the press roll in order to prevent the rewetting of the pulp. However, when the filtrate channels are to be cleaned, which they need to be at regular intervals, these anchored baffle plates hinder the cleaning of the filtrate channels. Instead of bolting or welding the baffle plates, it is suggested to provide axial grooves, into which the plates may be axially inserted. However, it can be difficult to remove, and also insert, the baffle plates from/into the filtrate channels, because of the friction between the baffle plate and the groove. To equip an already installed and existing press roll with these kinds of baffle plates can be a complicated and expensive procedure.

US 4,581,139 discloses a baffle insert member which is inserted in a filtrate channel of a rotary vacuum drum filer in order to prevent the rewetting. The insert member is described as replaceable, and a purpose is to equip existing drum filters with a rewetting prevention means. However, the transverse extension of the suggested insert member corresponds to the inner cross-section of the filtrate channel, and in order to the insert the insert member, at the end of the drum the entry of the filtrate channel must have the same cross-section as the rest of the filtrate channel. This is not always the case since the drum may have end structures which limit the entry of the filtrate channel. Since the transverse extension of the suggested insert member substantially corresponds to the inner cross-section of the filtrate channel, it may also be difficult to remove, and also to insert, the insert member from/into the filtrate channel because of the friction between the insert member and the inner walls of the filtrate channel, especially with regard to drums having a substantial axial extension. US 5,667,642 discloses a drum having a longitudinal axis having an outer periphery and a multiplicity of longitudinal, drainage grooves formed therein, as well as a cylindrical sheath enclosing the drum. US 5,667,642 does not disclose a rewetting prevention means according to the present invention.

### The Object of the Invention

The object of the present invention is thus to provide rewetting prevention equipment which does not prevent the cleaning of the filtrate channels. It is also an object of the present invention to provide rewetting prevention equipment which is easy to install in existing filter drums or press rolls.

### Summary of the Invention

The present invention is defined by the current claim 1. The above-mentioned object of the present invention is attained by providing an apparatus for processing pulp comprising a device of the kind mentioned in the introductory part of the description, having the features that the device comprises at least one biasing member which connects the filtrate barrier to the at least one support element, the biasing member being adapted to bias the filtrate barrier away from the support element to a first unbiased position, in relation to the support element, at which an extended transverse extension of the device is provided, and when the device is installed the biasing member is adapted to bias the filtrate barrier towards the radially outer wall of the filtrate channel, and that the biasing member is adapted to bias the filtrate barrier away from the support element to at least one second unbiased position, in relation to the support element, at which a reduced transverse extension of the device is provided, whereby the device is axially insertable into and removable from the filtrate channel.

By the present invention, the device does not return from the reduced transverse extension to the extended transverse extension by itself, and the filtrate barrier and the support element are axially displaceable in relation to each other in an easy manner between at least two resting or unbiased positions, whereby one of the filtrate barrier and the support element can be axially displaced in relation to other, providing a unbiased reduced transverse extension of the device, and the device of the present invention is thus easily inserted into the filtrate channel of an existing and already installed filter drum or press roll, and also easily removed from the filtrate channel to be exchanged or to clean the filtrate channel. Since the transverse extension of the device can be efficiently reduced when the filter barrier is positioned in the second unbiased position, the device of the present invention can also be easily inserted into a filtrate channel having limited or reduced entries to the filtrate channels at the ends of the drum or roll, because of edge structures of the press roll, or filter drum.

The unbiased position of the filtrate barrier is a position in which the biasing member is in an unbiased condition, or has an unbiased shape. The biasing member tries to return to its unbiased shape, and at the same time forces the filtrate barrier towards the unbiased position, or unloaded position. During insertion into or removal from the filtrate channel, the filtrate barrier is in the at least one second unbiased position, and when the device is to be positioned into its operative position inside the filtrate channel, the device is adjusted such that the biasing member biases the filtrate barrier toward the first unbiased position. When the device is installed in a filtrate channel, the device is adapted so that the filtrate barrier will not reach the first unbiased position, and consequently, the biasing member will not reach an unbiased condition when it is biasing the filtrate barrier towards the first unbiased position and towards the radially outer wall of the filtrate channel.

The processing of the pulp can include washing, pressing, washing and pressing, or filtering. The drum can for example be a filter drum of a drum washer, a roll, or a press roll, of a roll press for washing and/dewatering pulp.

If the filtrate barrier only could be biased towards one single unbiased position by the biasing members, at which position the filtrate barrier was biased towards the radially outer wall of the filtrate channel, i.e. that each biasing member was rigidly attached to the support element and the filtrate barrier, such a device would be difficult to remove and insert because of the friction between the inner walls of the filtrate channel and the filtrate barrier and support element, respectively, especially for devices and filtrate channels having a substantial axial extension. Further, such a device would be difficult to move pass a limited entry of a filtrate channel at the end of the press roll or drum. If the biasing property of the biasing member were reduced in order to make the biasing member easier to compress, the biasing member would no be able to bias the filtrate barrier towards the radially outer wall of the filtrate channel in a satisfactory manner when installed.

A plurality of filtrate barriers can be connected to one support element, and a plurality of support elements can be connected to one filtrate barrier. Advantageously, the filtrate barrier extends along a substantial part of the axial extension of the filtrate channel. Advantageously, the support element extends along a substantial part of the axial extension of the filtrate channel. Advantageously, the filtrate barrier is adapted to be positioned towards the radially outer wall of the filtrate channel in the trailing part of the filtrate channel in relation to the direction of rotation of the drum. Each biasing member can be adapted to bias the filtrate barrier away from the support element to a plurality of unbiased positions other than the first unbiased position.

According to an advantageous embodiment of the device, each biasing member is pivotable in relation to the filtrate barrier about a first pivot axis, which extends substantially perpendicular to the axial extension of the filtrate barrier, and is pivotable in relation to the support element about a second pivot axis which extends substantially perpendicular to the axial extension of the support element. Hereby, the device is efficiently collapsible and its transverse extension is reduced, by axially displacing the filtrate barrier in relation to the support element, or vice versa, providing easily insertable and removable rewetting prevention equipment. This is an efficient way to provide for that the device by itself is not forced from the reduced transverse extension to the extended transverse extension.

According to a further advantageous embodiment of the device, the first pivot axis is substantially parallel to the second pivot axis. Hereby, the collapsibility of the device is further improved, which further facilitates the installation and removal of the device.

According to another advantageous embodiment of the device, each biasing member is pivotally attached to the filtrate barrier by first attachment means and pivotally attached to the support element by second attachment means. Hereby, the collapsibility of the device is further improved, which further facilitates the installation and removal of the device.

According to yet another advantageous embodiment of the device, where the biasing member is pivotable about said first and second pivot axes, each biasing member is pivotally attached to the filtrate barrier via the first pivot axis by first attachment means and pivotally attached to the support element via the second pivot axis by second attachment means. Hereby, the collapsibility of the device is further improved, which further facilitates the installation and removal of the device.

According to still another advantageous embodiment of the device, the device comprises locking means for axially locking the filtrate barrier or the support element, to prevent the axial dislocation of the device. It can be enough to lock the filtrate barrier or the support element to prevent the movement of the other. The locking means can also be adapted to lock both the filtrate barrier and the support element. The locking means can be in the form of a locking member, for example a clamp, a screw, e.g. an elongated straining screw, the longitudinal extension of which is adjustable, which with a reduced extension is placed in the filtrate channel and then extended to support the biasing of the filtrate barrier towards the radially outer wall of the filtrate channel.

According to an advantageous embodiment of the device, the locking means are adapted to axially lock the support element. In some press rolls and filter drums, there are end rings between which the filtrate barrier can be seated, and by locking the support element the device is efficiently locked in its position in the filtrate channel. However, the locking means can also be adapted to lock the filtrate barrier.

According to a further advantageous embodiment, the device comprises a plurality of biasing members. The number of biasing member in order to attain a satisfactory functionality of the device depends on the axial extension of the filtrate barrier, and on the biasing condition, e.g. spring constant, of each biasing member.

According to another advantageous embodiment, when the device is installed, the filtrate barrier is adapted to extend both axially and in the direction of rotation of the drum. This improves the rewetting prevention character of the device, providing an even more efficient rewetting prevention.

According to yet another advantageous embodiment of the device, where the filtrate barrier is adapted to extend both axially and in the direction of rotation of the drum, the filtrate barrier is provided with an axially extending barrier lip which extends inwardly and forms an angle with the direction of rotation of the drum. This barrier lip further improves the rewetting prevention character of the device, providing an even more efficient rewetting prevention.

According to still another advantageous embodiment of the device, the barrier lip is adapted to be situated between the leading portion of the filtrate channel in relation to the direction of rotation of the drum and the remainder of the filtrate barrier to which the barrier lip is associated. This is an efficient location of the barrier lip to attain an efficient rewetting prevention.

According to yet another advantageous embodiment of the device, the biasing member comprises a spring. The spring can for example be a compression spring which is adapted to become shorter when biased or loaded. With regard to a helical compression spring, the turns of the helical are not touching in the unbiased, or unloaded, position. However, several other biasing members can be used. For example, the biasing member can be a tubular element made of an elastic or resilient material, such as a polymer, e.g. rubber. The biasing member can be in the form of an elongated flexible sheet, or ringshaped sheet, e.g. made of metal. Advantageously, the biasing member is made of a material which efficiently withstands the conditions in the filtrate channel, for example stainless steel.

According to a further advantageous embodiment of the device, said spring includes a helix with at least one turn, and in that the centre axis of said turn is substantially transverse to the longitudinal extension of the biasing member. This type of spring is advantageous because of its non-bulky structure, and thus, does not hinder the flow of filtrate in the filtrate channel, and it is uncomplicated in its structure and is therefore not expensive, thereby providing efficient, uncomplicated and inexpensive rewetting prevention means.

According to an advantageous embodiment of the apparatus according to the present invention, the apparatus comprises a rotatable second drum, in that the first and second drums are adapted to rotate in opposite directions and define a press nip between them, in which press nip the pulp is pressed, and in that the apparatus is arranged to feed the pulp in the direction of rotation of the drums through the press nip.

Further advantageous embodiments of the present invention and further advantages with the present invention emerge from the detailed description of embodiments.

### Brief Description of the Drawings

The present invention will now be described, for exemplary purposes, in more detail by way of embodiments and with reference to the enclosed drawings, in which:
- Fig. 1: is a schematic partial side view of a prior-art roll press during operation;
- Fig. 2: is a schematic side view of an embodiment of an apparatus in which the device according to the present invention can be installed;
- Fig. 3A: is a schematic side view of an embodiment of the device according to the present invention;
- Fig. 3B: is a schematic front view of the device of Fig. 3A, transversely sectioned for illustrative purposes;
- Fig. 4A: is a schematic partial side view of a press roll showing a filtrate channel in which the device of Fig. 3A is situated in a collapsed state;
- Fig. 4B: is a schematic front view of the device of Fig. 4A, transversely sectioned for illustrative purposes;
- Fig. 5A: is a schematic partial side view of a press roll showing a filtrate channel in which the device of Fig. 3A is situated in an extended and operative state;
- Fig. 5B: is a schematic front view of the device of Fig. 5A, transversely sectioned for illustrative purposes; and
- Fig. 6: is a schematic view of an embodiment of the locking means for axially locking the filtrate barrier or the support element.

### Detailed Description of Preferred Embodiments

Fig. 1 illustrates the rewetting with regard to a prior-art roll press having two co-operating and counter-rotating press rolls 102, 104 each rotating in direction of rotation R₁ and R₂. The pulp is fed in the direction of rotation of the press rolls 102, 104 and through a press nip 106 formed between the press rolls. Subsequent to the press nip 106, the pressure of the pulp 108 decreases and the filtrate 110 which has not been discharged from the filtrate channels 112, 114 returns through the outer surface 116, 118 of each press roll 102, 104 and dilutes the pulp 108. In Fig. 1, the rewetting is illustrated by arrows from the interior of the press rolls 102, 104 to zone A (rewetting zone) above the press nip 106. The pulp has a maximum dryness B prior to the rewetting zone A, whereas the pulp 108 leaving the roll press has the reduced dryness C because of the rewetting.

Fig. 2 shows an embodiment of an apparatus for processing cellulose-containing pulp by washing and pressing the pulp, in which the device 302 can be installed. The apparatus comprises a first drum 202, in the form of a first press roll 202, and a second drum 204, in the form of a second press roll 204, each being rotatable about an axis of rotation 203, 205 in a direction of rotation R₁, R₂, and having a permeable outer surface 206, 208 which is perforated, i.e. provided with apertures, whereby the outer surface 206, 208 is permeable to filtrate pressed out of the pulp. Each press roll 202, 204 is provided with a plurality of filtrate channels 210, 212 which extend along the axial extension of the each press roll 202, 204 and are provided inwardly of the outer surface 206, 208 to lead evacuated filtrate away. Each filtrate channel 210, 212 is defined by a radially outer wall 214, 216, a radially inner wall 218, 220 provided on an axial inner drum 222, 224, and two radial walls 226, 228, 230, 232 provided on support ribs. Each wall extends along the entire axial extension of each press roll 202, 204. The radially outer wall 214, 216 is leaky, or permeable to liquid. Herein, in the radially outer walls 214, 216 are formed by circumferential frame rings distributed and spaced apart along the axis of each press roll 202, 204, and supported by the above-mentioned support ribs, in ways known to the person skilled in the art. Each filtrate channel 210, 212 is provided with at least one outlet for discharging liquid therefrom, in ways known to the skilled person. The two press rolls 202, 204 are arranged to rotate in opposite directions, the first press roll 202 being arranged to rotate in a clockwise direction R₁, and the second press roll 204 being arranged to rotate in a counter clockwise direction R₂. The apparatus is arranged to receive the pulp on the outer surface of each press roll 202, 204 from two pulp distribution devices 234, 236 adapted to deposit the pulp on the outer surface 206, 208, and the pulp is fed in the direction of rotation of the press rolls 202, 204 through a press nip/roll nip 238 defined by and between the press rolls 202, 204, in which press nip 238 the pulp is pressed. At least in the region of the press nip 238 liquid is removed from the pulp and transported from the pulp to the filtrate channels 210, 212 through the outer surface 206, 208. The axes of rotation 203, 205 of the press rolls 202, 204 are in substantially the same horizontal plane, and the apparatus is arranged to feed the pulp through the press nip 238 in a substantially vertical direction from below upwards. Along the pulp's path between each pulp distribution device 234, 236 and the press nip 238, one or a plurality of wash zones can be provided in ways known to the person skilled in the art.

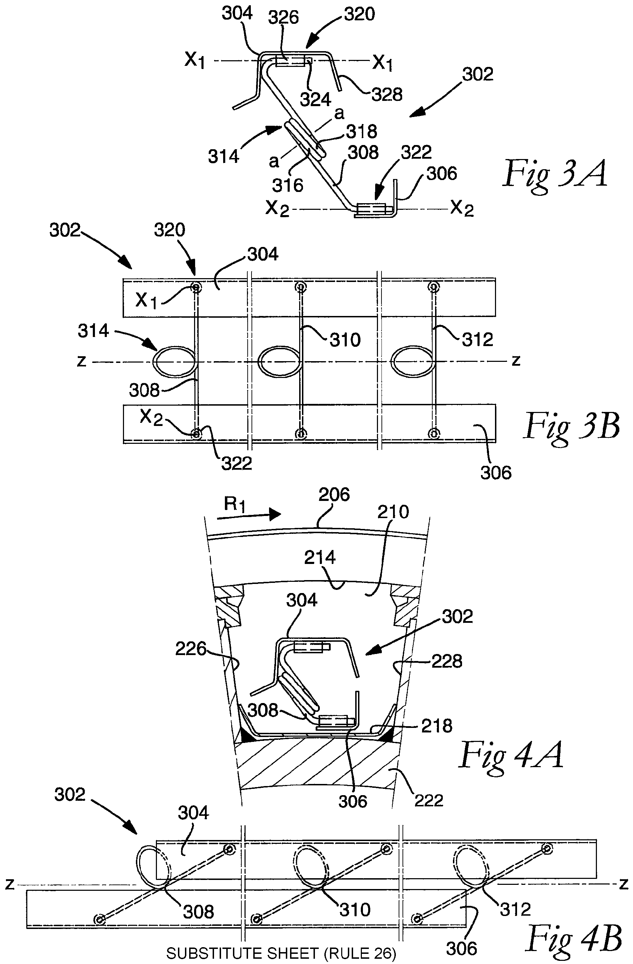

Fig. 3A is a schematic side view of an embodiment of the device 302 for preventing the rewetting of pulp according to the present invention, and Fig. 3B is a schematic front view of the device of Fig. 3A. The device 302 has a longer axial extension than what is shown in Fig. 3B, but in Fig. 3B, the device is transversely sectioned for illustrative purposes. The device 302 is adapted to be installed inside one of the plurality of filtrate channels 210 of the first press roll 202 of the apparatus of Fig. 2, for example. The device comprises an elongated filtrate barrier 304 for preventing the flow of liquid from the trailing part of the filtrate channel 210 to the outer surface 206 of the press roll 202. The filtrate barrier 304 is adapted to extend in the direction z-z of the axial extension of the filtrate channel 210 and the press roll 202. The filtrate barrier 304 is adapted to be positioned towards the radially outer wall 214 of the filtrate channel 210 in the trailing part of the filtrate channel 210 in relation to the direction of rotation R₁ of the press roll 202, to prevent the flow of liquid from the trailing part of the filtrate channel 210 to the outer surface 206 of the press roll 202. The trailing part of the filtrate channel 210 is the part adjacent to the trailing radial wall 226 in relation to the direction of rotation R₁ of the press roll 202. The device 302 includes an axially extending and elongated support element 306 adapted to be positioned towards the radially inner wall 218 of the filtrate channel 210 in the leading part of the filtrate channel 210. The leading part of the filtrate channel 210 is the part adjacent to the leading radial wall 228 in relation to the direction of rotation R₁ of the press roll 202. The leading radial wall 228 of the filtrate channel 210 reaches the press nip 238 before the trailing radial wall 226 of the same filtrate channel 210. The filtrate barrier 304 and the support element 306 extend along a substantial part of the axial extension of the filtrate channel 210 and are here in the form of axial plates made of a suitable material, e.g. stainless steel.

The device 302 further includes three biasing members 308, 310, 312, each in the form of a spring which is made of stainless steel and includes a helix 314 with two turns 316, 318. However, other biasing means are possible to use. The centre axis *a-a* of the turns 316, 318 is substantially transverse to the longitudinal extension of the biasing member 308, 310, 312, and also substantially transverse to the axial extension z-z of the filtrate barrier 304. The biasing members 308, 310, 312 connect the filtrate barrier 304 to the support element 306. Each biasing member 308, 310, 312 is pivotable in relation to the filtrate barrier 304 about a first pivot axis *x₁-x₁,* which extends substantially perpendicular to the axial extension z-z of the filtrate barrier 304, and is pivotable in relation to the support element 306 about a second pivot axis *x₂-x₂* which extends substantially perpendicular to the axial extension z-z of the support element 306. The first pivot axis *x₁-x₁* is substantially parallel to the second pivot axis *x₂-x₂.* The biasing member 308 is pivotally attached to the filtrate barrier 304 via the first pivot axis *x₁-x₁* by first attachment means 320 and pivotally attached to the support element 306 via the second pivot axis *x₂*-*x₂* by second attachment means 322. The first attachment means 320 comprises a first end 324 of the biasing member 308 which extends in the direction of the first pivot axis *x₁-x₁* and a tubular element 326 which is attached to the filtrate barrier 304 and encloses said first end 324, the tubular element 326 also extending the direction of the first pivot axis *x₁-x₁.* Said first end 324 and the tubular element 326 are rotatable in relation to each other about the first pivot axis *x₁-x₁.* The second attachment means 322 has corresponding structure as the first attachment means 320. However, several other designs of the attachment means are possible. In this embodiment, all biasing members are attached to the filtrate barrier 304 and the support element 306 in a corresponding way.

The biasing members 308, 310, 312 are adapted to bias the filtrate barrier 304 away from the support element 306 to a first unbiased position, in relation to the support element 306, at which an extended transverse extension of the device is provided, here both an extended radial extension and circumferential extension. In Figs. 3A-3B, the filtrate barrier 304 is in the first unbiased position, and the biasing members 308, 310, 312 are fully extending and in an unbiased or unloaded state, providing an extended distance between the filtrate barrier 304 and support element 306. However, other embodiments can have only an extended radial extension or only an extended circumferential extension in said first unbiased position.

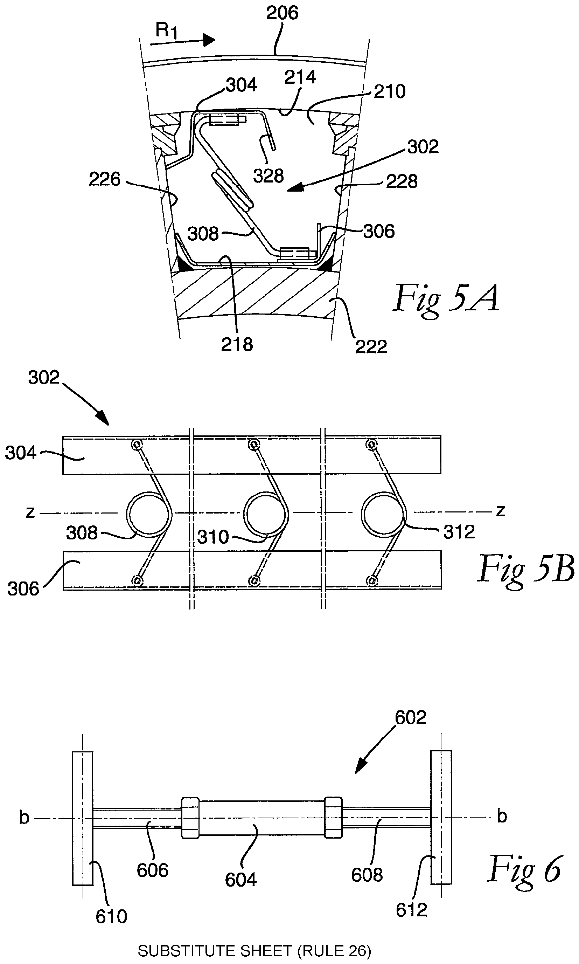

Fig. 5A is a partial side view of the press roll 202 showing the filtrate channel 210 in which the device 302 of Fig. 3A is installed and is in an extended and operative state. Fig. 5B is a schematic front view of the device 302 of Fig. 5A seen against the direction of rotation R₁. The biasing members 308, 310, 312 are adapted to bias the filtrate barrier 304 towards the radially outer wall 214 of the filtrate channel 210, as seen in Fig. 5A. In Figs. 5A-5B, the filtrate barrier 304 is in a biased position, and the biasing members 308, 310, 312 are compressed and in a biased, or loaded state. When the device 302 is installed in the filtrate channel 210, the filtrate barrier 304 is adapted to extend both axially and in the direction of rotation R₁ of the press roll 202, and the filtrate barrier 304 is provided with an axially extending and elongated barrier lip 328 which extends inwardly and forms an angle with the direction of rotation R₁ of the press roll 202, for providing additional rewetting prevention. The barrier lip 328 is adapted to be situated between the leading portion of the filtrate channel 210, in relation to the direction of rotation R₁ of the press roll 202, and the remainder of the filtrate barrier 304 to which the barrier lip 328 is attached. Herein, the barrier lip 328 is integral with the filtrate barrier 304.

Fig. 4A is a partial side view of the filtrate channel 202 in which the device 302 of Fig. 3A is situated in a collapsed state, and Fig. 4B is a schematic front view of the device 302 of Fig. 4A, transversely sectioned for illustrative purposes. Here, by means of the pivotal attachment of the biasing members 308, 310, 312 to the filtrate barrier 304 and the support element 306, the filtrate barrier 304 and the support element 306 have been axially displaced in relation to each other, providing an unbiased reduced transverse extension of the device 302, i.e. a collapsed and unbiased state of the device 302. The distance between the filtrate barrier 304 and the support element 306 has been radically reduced. By means of the pivotal attachment of the biasing members 308, 310, 312 to the filtrate barrier 304 and the support element 306, the biasing members 308, 310, 312 are adapted to bias the filtrate barrier 304 away from the support element 306 to a plurality of unbiased positions other than the first unbiased position shown in Figs. 3A and 3B. Since the device 302 can be collapsed to an unloaded collapsed state, as shown in Figs. 4A and 4B, in which the transverse extension of it is radically reduced, the device 302 is easily inserted into the filtrate channel 210 of an existing and already installed press roll 202, or filter drum, and also easily removed from the filtrate channel 210 to be exchanged or to clean the filtrate channel 210.

When the device 302 is installed and operative in the filtrate channel 210, as shown in Figs. 5A-5B, the device 302 can be supplemented with locking means 602 for axially locking the filtrate barrier 304 and the support element 306, to further prevent the axial dislocation of the device 302. Fig. 6 shows an example of such locking means 602 in the form of an elongated straining element 602, the longitudinal extension of which is adjustable. The straining element 602 defines a longitudinal axis b-b and comprises a cylindrical central member 604 which via threads is connected to a first and a second end member 606, 608 which are cylindrical and inserted into the central member 602. Both end members 606, 608 are axially displaceable in relation to the central member 604, providing for that the straining element 602 can attain a reduced longitudinal extension when it is placed in the filtrate channel 210 and, when positioned in the filtrate channel 210, an extended longitudinal extension to support the biasing of the filtrate barrier 304 towards the radially outer wall 214 of the filtrate channel 210. However, other locking means are possible. Each end member 606, 608 is provided with a support member 610, 612 extending substantially perpendicular to the longitudinal axis *b-b* of the straining element 602 and adapted to be positioned in the filtrate channel 210 with its longitudinal extension in the axial direction of the filtrate channel 210.

The biasing members can extend in circumferential direction, in radial direction, or in a diagonal direction, when the device is installed and operative in the filtrate channel. In some embodiments, the outer surface of a drum and the radially outer walls of the filtrate channels could be provided on the same circumferential deck.

The invention shall not be considered limited to the embodiments illustrated, but can be modified and altered in many ways by one skilled in the art, without departing from the scope of the appended claims.

## Claims

1. An apparatus for processing pulp comprising a device (302) for preventing the rewetting of pulp in the apparatus, the apparatus further comprising at least one drum (202, 204) rotatable about an axis of rotation (203, 205) and provided with an outer surface (206, 208) permeable to liquid and a plurality of filtrate channels (210, 212), which extend along the axial extension of the drum (202, 204) and are provided inwardly of the outer surface (206, 208), the apparatus receives the pulp on the outer surface (206, 208) of the drum (202, 204) and processes the pulp situated on the outer surface (206, 208) while rotating the drum (202, 204), and the apparatus processes the pulp by at least removing liquid from the pulp and transporting the liquid from the pulp to the filtrate channels (210, 212) through the outer surface (206, 208), each filtrate channel (210, 212) being adapted to discharge liquid therefrom and being defined by at least a radially outer wall (214), said device (302) being installed in one of the plurality of filtrate channels (210, 212), and the device (302) comprising:
an axially extending filtrate barrier (304), which is positioned towards the radially outer wall (214) of the filtrate channel (210, 212) to prevent the flow of liquid from the trailing part of the filtrate channel (210, 212) to the outer surface (206, 208) of the drum (202, 204), and
at least one axially extending support element (306) connected to the filtrate barrier (304), **characterized in that** the device (302) comprises at least one biasing member (308, 310, 312), which connects the filtrate barrier (304) to the at least one support element (306), the biasing member (308, 310, 312) being adapted to bias the filtrate barrier (304) away from the support element (306) to a first unbiased position, in relation to the support element (306), at which an extended transverse extension of the device (302) is provided, wherein an extended distance between the filtrate barrier (304) and the support element (306) is provided, and when the device (302) is installed the biasing member (308, 310, 312) being configured to bias the filtrate barrier (304) towards the radially outer wall (214) of the filtrate channel (210, 212), and **in that** the biasing member (308, 310, 312) is adapted to bias the filtrate barrier (304) away from the support element (306) when the device is installed in the filtrate channel (210, 212) to a biased position, wherein the biasing members (308, 310, 312) are compressed and in a biased state,
and **in that** the biasing member (308, 310, 312) is adapted to bias the filtrate barrier (304) away from the support element (306) to at least one second unbiased position, in relation to the support element (306), at which a reduced transverse extension of the device (302) is provided, whereby the device (302) is axially insertable into and removable from the filtrate channel (210, 212).

2. An apparatus according to claim 1, **characterized in that** each biasing member (308, 310, 312) is pivotable in relation to the filtrate barrier (304) about a first pivot axis (*x₁-x₁*), which extends substantially perpendicular to the axial extension (*z-z*) of the filtrate barrier (304), and is pivotable in relation to the support element (306) about a second pivot axis (*x₂-x₂*), which extends substantially perpendicular to the axial extension (*z-z*) of the support element (306).

3. An apparatus according to claim 2, **characterized in that** the first pivot axis (*x₁-x₁*) is substantially parallel to the second pivot axis (*x₂-x₂*).

4. An apparatus according to claim 1, **characterized in that** each biasing member (308, 310, 312) is pivotally attached to the filtrate barrier (304) by first attachment means (320) and pivotally attached to the support element (306) by second attachment means (322).

5. An apparatus according to claim 2 or 3, **characterized in that** each biasing member (308, 310, 312) is pivotally attached to the filtrate barrier (304) via the first pivot axis (*x₁-x₁*) by first attachment means (320) and pivotally attached to the support element (306) via the second pivot axis (*x₂-x₂*) by second attachment means (322).

6. An apparatus according to any of the claims 1 to 5, **characterized in that** the device (302) comprises locking means (602) for axially locking the filtrate barrier (304) and/or the support element (306), to further prevent the axial dislocation of the device (302).

7. An apparatus according to claim 6, **characterized in that** the locking means (602) are adapted to axially lock the support element (306).

8. An apparatus according to any of the claims 1 to 7, **characterized in that** the device (302) comprises a plurality of biasing members (308, 310, 312).

9. An apparatus according to any of the claims 1 to 8, **characterized in that** the filtrate barrier (304) is adapted to extend both axially and in the direction of rotation (R₁, R₂) of the drum (202, 204).

10. An apparatus according to claim 9, **characterized in that** the filtrate barrier (304) is provided with an axially extending barrier lip (328), which extends inwardly and forms an angle with the direction of rotation (R₁, R₂) of the drum (202, 204).

11. An apparatus according to claim 10, **characterized in that** the barrier lip (328) is adapted to be situated between the leading portion of the filtrate channel (210, 212), in relation to the direction of rotation (R₁, R₂) of the drum (202, 204), and the remainder of the filtrate barrier (304) to which the barrier lip (328) is associated.

12. An apparatus according to any of the claims 1 to 11, **characterized in that** the biasing member (308, 310, 312) comprises a spring.

13. An apparatus according to claim 12, **characterized in that** said spring includes a helix (314) with at least one turn (316, 318), and **in that** the centre axis (a-a) of said turn (316, 318) is substantially transverse to the longitudinal extension of the biasing member (308, 310, 312).

14. An apparatus according to any of claims 1-13, **characterized in that** the apparatus comprises a rotatable second drum (204), **in that** the first and second drums (202, 204) are adapted to rotate in opposite directions (R₁, R₂) and define a press nip (238) between them, in which press nip (238) the pulp is pressed, and **in that** the apparatus is arranged to feed the pulp in the direction of rotation (R₁, R₂) of the drums (202, 204) through the press nip (238).

## Patentansprüche

1. Anordnung zur Verarbeitung einer Pulpe, umfassend eine Vorrichtung (302) zur Verhinderung der Wiederbefeuchtung einer Pulpe in der Anordnung, wobei die Anordnung ferner mindestens eine Trommel (202, 204) umfasst, die um eine Drehachse (203, 205) drehbar ist, und mit einer äußeren Fläche (206, 208), die für Flüssigkeit durchlässig ist, und einer Vielzahl von Filtratkanälen (210, 212), die sich entlang der axialen Erstreckung der Trommel (202, 204) erstrecken und von der äußeren Fläche (206, 208) einwärts bereitgestellt sind, bereitgestellt ist, wobei die Anordnung, die Pulpe an der äußeren Fläche (206, 208) der Trommel (202, 204) erhält und die Pulpe, die sich an der äußeren Fläche (206, 208) befindet, verarbeitet, während sie die Trommel (202, 204) dreht und die Anordnung die Pulpe mindestens durch Entfernen von Flüssigkeit aus der Pulpe und Transportieren der Flüssigkeit aus der Pulpe in die Filtratkanäle (210, 212) durch die äußere Fläche (206, 208) verarbeitet, wobei jeder Filtratkanal (210, 212) dazu angepasst ist, Flüssigkeit daraus abzugeben und durch mindestens eine radial äußere Wand (214) definiert ist, wobei die Vorrichtung (302) in einem von der Vielzahl von Filtratkanälen (210, 212) installiert ist und die Vorrichtung (302) umfasst:
eine sich axial erstreckende Filtratbarriere (304), die in Richtung der radial äußeren Wand (214) des Filtratkanals (210, 212) positioniert ist, um den Strom von Flüssigkeit aus dem hinteren Teil des Filtratkanals (210, 212) zu der äußeren Fläche (206, 208) der Trommel (202, 204) zu verhindern, und
mindestens ein sich axial erstreckendes Stützelement (306), das mit der Filtratbarriere (304) verbunden ist, **dadurch gekennzeichnet, dass** die Vorrichtung (302) mindestens ein Vorspannelement (308, 310, 312) umfasst, das die Filtratbarriere (304) mit dem mindestens einen Stützelement (306) verbindet, wobei das Vorspannelement (308, 310, 312) dazu angepasst ist, die Filtratbarriere (304) von dem Stützelement (306) weg in eine erste nicht vorgespannte Position in Bezug auf das Stützelement (306) vorzuspannen, in der eine erweiterte Quererstreckung der Vorrichtung (302) bereitgestellt wird, wobei ein erweiterter Abstand zwischen der Filtratbarriere (304) und dem Stützelement (306) bereitgestellt wird, und wenn die Vorrichtung (302) installiert ist, das Vorspannelement (308, 310, 312) dazu konfiguriert ist, die Filtratbarriere (304) in Richtung der radial äußeren Wand (214) des Filtratkanals (210, 212) vorzuspannen und dass das Vorspannelement (308, 310, 312) dazu angepasst ist, die Filtratbarriere (304) von dem Stützelement (306) weg, wenn die Vorrichtung in dem Filtratkanal (210, 212) installiert ist, in eine vorgespannte Position vorzuspannen, wobei die Vorspannelemente (308, 310, 312) komprimiert und in einem vorgespannten Zustand sind,
und dadurch dass das Vorspannelement (308, 310, 312) dazu angepasst ist, die Filtratbarriere (304) von dem Stützelement (306) weg in mindestens eine zweite nicht vorgespannte Position in Bezug auf das Stützelement (306) vorzuspannen, in der eine reduzierte Quererstreckung der Vorrichtung (302) bereitgestellt wird, wodurch die Vorrichtung (302) axial in den Filtratkanal (210, 212) einführbar und daraus entfernbar ist.

2. Anordnung nach Anspruch 1, **dadurch gekennzeichnet, dass** jedes Vorspannelement (308, 310, 312) in Bezug auf die Filtratbarriere (304) um eine erste Schwenkachse (*x₁-x₁*)*,* die sich im Wesentlichen senkrecht zu der axialen Erstreckung (*z-z*) der Filtratbarriere (304) erstreckt, schwenkbar ist und in Bezug auf das Stützelement (306) um eine zweite Schwenkachse (*x₂*-*x₂*), die sich im Wesentlichen senkrecht zu der axialen Erstreckung (*z-z*) des Stützelements (306) erstreckt, schwenkbar ist.

3. Anordnung nach Anspruch 2, **dadurch gekennzeichnet, dass** die erste Schwenkachse (*x₁-x₁*) im Wesentlichen parallel zu der zweiten Schwenkachse (*x₂-x₂*) ist.

4. Anordnung nach Anspruch 1, **dadurch gekennzeichnet, dass** jedes Vorspannelement (308, 310, 312) durch erste Befestigungsmittel (320) an der Filtratbarriere (304) schwenkbar angebracht ist und durch zweite Befestigungsmittel (322) an dem Stützelement(306) schwenkbar angebracht ist.

5. Anordnung nach Anspruch 2 oder 3, **dadurch gekennzeichnet, dass** jedes Vorspannelement (308, 310, 312) über die erste Schwenkachse (*x₁-x₁*) durch erste Befestigungsmittel (320) an der Filtratbarriere (304) schwenkbar angebracht ist und über die zweite Schwenkachse (*x₂-x₂*) durch zweite Befestigungsmittel (322) an dem Stützelement (306) schwenkbar angebracht ist.

6. Anordnung nach einem der Ansprüche 1 bis 5, **dadurch gekennzeichnet, dass** die Vorrichtung (302) Verriegelungsmittel (602) zum axialen Verriegeln der Filtratbarriere (304) und/oder des Stützelements (306) umfasst, um die axiale Verschiebung der Vorrichtung (302) weiter zu verhindern.

7. Anordnung nach Anspruch 6, **dadurch gekennzeichnet, dass** die Verriegelungsmittel (602) dazu angepasst sind, das Stützelement (306) axial zu verriegeln.

8. Anordnung nach einem der Ansprüche 1 bis 7, **dadurch gekennzeichnet, dass** die Vorrichtung (302) eine Vielzahl von Vorspannelementen (308, 310, 312) umfasst.

9. Anordnung nach einem der Ansprüche 1 bis 8, **dadurch gekennzeichnet, dass** die Filtratbarriere (304) dazu angepasst ist, sich sowohl axial als auch in der Drehrichtung (R₁, R₂) der Trommel (202, 204) zu erstrecken.

10. Anordnung nach Anspruch 9, **dadurch gekennzeichnet, dass** die Filtratbarriere (304) mit einer sich axial erstreckenden Barrierelippe (328) bereitgestellt ist, die sich einwärts erstreckt und einen Winkel mit der Drehrichtung (R₁, R₂) der Trommel (202, 204) bildet.

11. Anordnung nach Anspruch 10, **dadurch gekennzeichnet, dass** die Barrierelippe (328) dazu angepasst ist, zwischen dem vorderen Abschnitt des Filtratkanals (210, 212) in Bezug auf die Drehrichtung (R₁, R₂) der Trommel (202, 204) und dem Rest der Filtratbarriere (304), der die Barrierelippe (328) zugeordnet ist, angeordnet zu sein.

12. Anordnung nach einem der Ansprüche 1 bis 11, **dadurch gekennzeichnet, dass** das Vorspannelement (308, 310, 312) eine Feder umfasst.

13. Anordnung nach Anspruch 12, **dadurch gekennzeichnet, dass** die Feder eine Helix (314) mit mindestens einer Windung (316, 318) beinhaltet und dass die Mittelachse (a-a) der Windung (316, 318) im Wesentlich quer zu der Längserstreckung des Vorspannelements (308, 310, 312) ist.

14. Anordnung nach einem der Ansprüche 1-3, **dadurch gekennzeichnet, dass** die Anordnung eine drehbare zweite Trommel (204) umfasst, dass die erste und zweite Trommel (202, 204) dazu angepasst sind, sich in entgegengesetzte Richtungen (R₁, R₂) zu drehen und einen Pressspalt (238) zwischen ihnen definieren, wobei die Pulpe in diesem Pressspalt (238) gepresst wird, und dadurch dass die Anordnung dazu angeordnet ist, die Pulpe in der Drehrichtung (R₁, R₂) der Trommeln (202, 204) durch den Pressspalt (238) zuzuführen.

## Revendications

1. Appareil de traitement de pâte à papier comprenant un dispositif (302) pour empêcher la réhumidification de la pâte à papier dans l'appareil, l'appareil comprenant en outre au moins un tambour (202, 204) rotatif autour d'un axe de rotation (203, 205) et doté d'une surface externe (206, 208) perméable au liquide et une pluralité de conduits pour filtrat (210, 212), qui s'étendent le long de l'extension axiale du tambour (202, 204) et sont prévus à l'intérieur de la surface externe (206, 208), l'appareil reçoit la pâte à papier sur la surface externe (206, 208) du tambour (202, 204) et traite la pâte à papier située sur la surface externe (206, 208) tout en faisant tourner le tambour (202, 204), et l'appareil traite la pâte à papier au moins en retirant du liquide de la pâte à papier et en transportant le liquide de la pâte à papier aux conduits pour filtrat (210, 212) à travers la surface externe (206, 208), chaque conduit pour filtrat (210, 212) étant adapté pour évacuer le liquide de celui-ci et étant défini par au moins une paroi radialement externe (214), ledit dispositif (302) étant installé dans l'un de la pluralité de conduits pour filtrat (210, 212), et le dispositif (302) comprenant :
une barrière pour filtrat s'étendant axialement (304), qui est positionnée vers la paroi radialement externe (214) du conduit pour filtrat (210, 212) pour empêcher l'écoulement de liquide de la partie arrière du conduit pour filtrat (210, 212) à la surface externe (206, 208) du tambour (202, 204), et
au moins un élément de soutien (306) s'étendant axialement relié à la barrière pour filtrat (304), **caractérisé en ce que** le dispositif (302) comprend au moins un organe de sollicitation (308, 310, 312), qui relie la barrière pour filtrat (304) à l'au moins un élément de soutien (306), l'organe de sollicitation (308, 310, 312) étant adapté pour solliciter la barrière pour filtrat (304) à l'écart de l'élément de soutien (306) jusqu'à une première position sans sollicitation, par rapport à l'élément de soutien (306), au niveau de laquelle une extension transversale étendue du dispositif (302) est conférée, dans lequel une distance étendue entre la barrière pour filtrat (304) et l'élément de soutien (306) est conférée, et lorsque le dispositif (302) est installé l'organe de sollicitation (308, 310, 312) étant configuré pour solliciter la barrière pour filtrat (304) vers la paroi radialement externe (214) du conduit pour filtrat (210, 212), et **en ce que** l'organe de sollicitation (308, 310, 312) est adapté pour solliciter la barrière pour filtrat (304) à l'écart de l'élément de soutien (306) lorsque le dispositif est installé dans le conduit pour filtrat (210, 212) jusqu'à une position sollicitée, dans lequel les organes de sollicitation (308, 310, 312) sont comprimés et dans un état sollicité,
et **en ce que** l'organe de sollicitation (308, 310, 312) est adapté pour solliciter la barrière pour filtrat (304) à l'écart de l'élément de soutien (306) jusqu'à au moins une seconde position sans sollicitation, par rapport à l'élément de soutien (306), au niveau de laquelle une extension transversale réduite du dispositif (302) est conférée, moyennant quoi le dispositif (302) est axialement insérable dans et retirable du conduit pour filtrat (210, 212).

2. Appareil selon la revendication 1, **caractérisé en ce que** chaque organe de sollicitation (308, 310, 312) est apte à pivoter par rapport à la barrière pour filtrat (304) autour d'un premier axe de pivotement (*x₁-x₁*)*,* qui s'étend sensiblement perpendiculairement à l'extension axiale (*z-z*) de la barrière pour filtrat (304), et est apte à pivoter par rapport à l'élément de soutien (306) autour d'un second axe de pivotement (*x₂*-*x₂*), qui s'étend sensiblement perpendiculairement à l'extension axiale (z-z) de l'élément de soutien (306).

3. Appareil selon la revendication 2, **caractérisé en ce que** le premier axe de pivotement (*x₁-x₁*) est sensiblement parallèle au second axe de pivotement (*x₂-x₂*).

4. Appareil selon la revendication 1, **caractérisé en ce que** chaque organe de sollicitation (308, 310, 312) est fixé de manière pivotante à la barrière pour filtrat (304) par un premier moyen de fixation (320) et fixé de manière pivotante à l'élément de soutien (306) par un second moyen de fixation (322) .

5. Appareil selon la revendication 2 ou 3, **caractérisé en ce que** chaque organe de sollicitation (308, 310, 312) est fixé de manière pivotante à la barrière pour filtrat (304) par l'intermédiaire du premier axe de pivotement (*x₁-x₁*) par un premier moyen de fixation (320) et fixé de manière pivotante à l'élément de soutien (306) par l'intermédiaire du second axe de pivotement (*x₂-x₂*) par un second moyen de fixation (322).

6. Appareil selon l'une quelconque des revendications 1 à 5, **caractérisé en ce que** le dispositif (302) comprend un moyen de verrouillage (602) pour verrouiller axialement la barrière pour filtrat (304) et/ou l'élément de soutien (306), pour en outre empêcher la dislocation axiale du dispositif (302).

7. Appareil selon la revendication 6, **caractérisé en ce que** le moyen de verrouillage (602) est adapté pour verrouiller axialement l'élément de soutien (306).

8. Appareil selon l'une quelconque des revendications 1 à 7, **caractérisé en ce que** le dispositif (302) comprend une pluralité d'organes de sollicitation (308, 310, 312).

9. Appareil selon l'une quelconque des revendications 1 à 8, **caractérisé en ce que** la barrière pour filtrat (304) est adaptée pour s'étendre à la fois axialement et dans la direction de rotation (R₁, R₂) du tambour (202, 204).

10. Appareil selon la revendication 9, **caractérisé en ce que** la barrière pour filtrat (304) est dotée d'une lèvre de barrière (328) s'étendant axialement, qui s'étend vers l'intérieur et forme un angle avec la direction de rotation (R₁, R₂) du tambour (202, 204).

11. Appareil selon la revendication 10, **caractérisé en ce que** la lèvre de barrière (328) est adaptée pour être située entre la partie avant du conduit pour filtrat (210, 212), par rapport à la direction de rotation (R₁, R₂) du tambour (202, 204), et le reste de la barrière pour filtrat (304) à laquelle la lèvre de barrière (328) est associée.

12. Appareil selon l'une quelconque des revendications 1 à 11, **caractérisé en ce que** l'organe de sollicitation (308, 310, 312) comprend un ressort.

13. Appareil selon la revendication 12, **caractérisé en ce que** ledit ressort inclut une hélice (314) comportant au moins une spire (316, 318), et **en ce que** l'axe central (*a-a*) de ladite spire (316, 318) est sensiblement transversal à l'extension longitudinale de l'organe de sollicitation (308, 310, 312).

14. Appareil selon l'une quelconque des revendications 1 à 13, **caractérisé en ce que** l'appareil comprend un second tambour (204) rotatif, **en ce que** les premier et second tambours (202, 204) sont adaptés pour tourner dans des directions (R₁, R₂) opposées et définir une ligne de contact (238) entre eux, dans laquelle ligne de contact (238) la pâte à papier est pressée, et **en ce que** l'appareil est agencé pour alimenter la pâte à papier dans la direction de rotation (R₁, R₂) des tambours (202, 204) à travers la ligne de contact (238).
